Europäisches Patentamt

European Patent Office

Office européen des brevets

(19)

(11) Publication number: 0 281 596 B1

# EUROPEAN PATENT SPECIFICATION

(12)

(45) Date of publication of patent specification: 17.06.92   (51) Int. Cl.⁵: B31F 1/00

(21) Application number: 87905891.5

(22) Date of filing: 03.09.87

(86) International application number:
PCT/US87/02173

(87) International publication number:
WO 88/01565 (10.03.88 88/06)

(54) PROCESS OF FORMING A CONTOURED INSULATING SHEET.

(30) Priority: 03.09.86 US 903191

(43) Date of publication of application:
14.09.88 Bulletin 88/37

(45) Publication of the grant of the patent:
17.06.92 Bulletin 92/25

(84) Designated Contracting States:
BE CH DE FR GB IT LI NL SE

(56) References cited:
NL-A- 6 604 156       US-A- 3 265 530
US-A- 3 654 019       US-A- 3 891 738
US-A- 3 911 186       US-A- 4 052 241
US-A- 4 119 749       US-A- 4 124 421
US-A- 4 260 575       US-A- 4 274 901
US-A- 4 313 776       US-A- 4 327 049
US-A- 4 379 101       US-A- 4 469 655

(73) Proprietor: ASTECHNOLOGIES, INC.
1125 Northmeadow Parkway sSuite 120
Roswell, GA 30075(US)

(72) Inventor: ELLIOTT, George, M.
4097 Whitehall Avenue
Alpharetta, GA 30201(US)

(74) Representative: Vossius & Partner
Siebertstrasse 4 P.O. Box 86 07 67
W-8000 München 86(DE)

**Description**

This invention concerns a process for forming and rigidifying a contoured insulating sheet made of loose fibers or open-cell foam, e.g., randomly oriented glass fibers bound together with a phenol-formaldehyde resin. In particular, it is directed to a process for forming such a sheet by compressing and heat-treating a resin-impregnated mat of such fibers or foam.

Contoured insulating sheets formed of loose fibers or open-cell foam rigidified by a resinous binder find use in a variety of applications. In automobiles, for instance, they are used as the shell or substrate for interior panels, headliners, floor pads, hood liners, and enclosures or covers for various engine parts, including rocker covers, front covers, dust covers, and undercovers. Methods of forming such products are disclosed in US-A-4 327 049, US-A-4 385 955, and US-A-4 466 848. The contoured sheets are used to insulate against sound or heat, or both. A conventional method of forming such sheets is by compressing and heating a flexible, uniform thickness mat of loose fibers or open-cell foam impregnated with an uncured, heat-activated adhesive between two mold halves. Such mats are commercially available stock material and are disclosed, for example, in US-A-3 025 202.

US-A-4 379 101 discloses a process according to the preamble of claim 1.

One of the most important factors in manufacturing such insulating sheets is the residence time in the mold. The quicker the sheets can be formed, rigidified, and released from the mold, the lower the production cost.

It is therefore an object of the invention to provide a process that can shorten the mold residence time significantly. This object is achieved by the process according to the claims.

The present process is especially useful in preparing insulating sheets wherein the thickness varies substantially from one area to another, i.e., the clearance between the dies is not uniform. Automobile headliner shells are a good example. They usually are thicker in the center than at the edges. This makes them stronger around their periphery, where they are fastened to the automobile body, but without significant sacrifice of insulating effectiveness. Also, the thinner edge facilitates the application of decorative trim or the overlap of side panels.

A variety of fibers or foams can be used to construct the mat employed in the present process. Glass fibers are commonly used and are preferred. Textile waste, known as "shoddy", also can be used. The fibers either will be loosely woven or nonwoven, e.g., randomly oriented. Open-cell polyurethane or polyolefin foams can be used as well. For added strength, the foam can be reinforced with a fibrous filler, such as chopped fiberglass. The mat will have a substantially uniform thickness, often in the range of about 38.1 to 50.8 mm (1-1/2 to 2 inches). A preferred mass per surface is about 0.8 to 1.4 kg/m$^2$ (1-1/2 to 2-1/2 pounds per square yard). The mat is typically soft, flexible, and somewhat resilient, prior to being rigidified by the process of the present invention.

Any of various chemicals can be used as the heat-activatable adhesive, provided it has an activation temperature which is below the temperature at which the mat melts or degrades. Examples are polyamide resins, polyurethane resins (both polyether-based polyurethanes and polyester-based polyurethanes), and the phenolic resins. Both thermoplastic and thermosettable adhesives can be used. A thermosettable adhesive solidifies, or sets, when heated to its activation temperature and cannot be remelted. A thermoplastic adhesive is normally solid and melts at its activation temperature, then resolidifies when cooled. Thermoplastic adhesives can be remelted. Phenol-formaldehyde resins, which are thermosettable, are often preferred. The activation temperature of the adhesive usually will be above about 93°C (200°F), for example in the range of about 110° to 177°C (230 to 350°F).

Apparatus that can be used to perform the present process are disclosed in International Patent Applications No. PCT/US 86/02807 and No. PCT/US 87/01111.

Both dies are preheated prior to being pressed against the mat. Precisely how hot the dies should be depends upon the activation temperature of the adhesive. Preferably the temperature of the dies will be high enough to warm the adhesive to near its activation temperature. It will be suitable, for example, if the surface temperature of each die is below the adhesive's activation temperature but within about 11°C (20 Fahrenheit degrees) thereof, e.g., in the range of about 98° to 166°C (210 to 330°F). The preferred means of preheating the dies is by use of electrical resistance heaters.

If the finished insulating sheet is to have regions where the mat is highly compacted, as compared to other less dense regions, it will require the use of a die set in which at least one of the dies has protruding sections, resulting in a relatively narrow clearance between the dies when they are brought fully together. It may be preferred in such a situation to use the apparatus disclosed in the aforementioned International Patent Application No. PCT/US 87/01111, wherein means are provided for preheating the dies' protruding sections to a higher temperature than the land areas. For example, the protruding sections of the die might be heated to a temperature that is about 11° to 23°C (20 to 40 Fahrenheit degrees) higher than that of the adjacent land area.

The perforations in each die should be relatively small, e.g., having diameters in the range of about 0.88 to 2.42 mm (0.035 to 0.095 inch). There should be enough of the perforations, and they should be spaced closely enough together, to ensure relatively uniform heating of the adhesive. The smaller the perforations, the closer they should be. Generally, the perforations should be spaced not more than about 12.7 mm (1/2 inch) apart.

The temperature, pressure, flow rate, and duration of ejection of the superheated steam into the compressed mat are to a certain extent interrelated. A combination of these conditions should be selected which will bring the adhesive to its activation temperature. Usually the steam will have a temperature in range of about 176° to 344°C (350 to 650°F) and a pressure of about 5.1 to 7.2 bar (75 to 90 pounds per square inch gauge (psig)). (This is as measured before the steam contacts the die surface.)

Steam of the same temperature and pressure can be sent to the land areas as that sent to the die's protruding sections, or the two zones can be supplied with separate sources of steam, at different temperatures and/or pressures. The steam temperature will drop as the steam passes through the holes in the contact surface of the die, if the die is at a lower temperature. The temperature will drop less when passing through the holes in the protruding sections, however, if those sections are preheated to a higher temperature than the land areas. Therefore, although a single source of superheated steam may be used, the steam that enters the thicker regions of the mat may be at a significantly lower temperature than that which is injected into the more compacted regions. Also, separate sources of superheated steam can be used for the two regions.

The superheated steam may optionally be mixed with hot air, e.g., air having a temperature in the range or about 176° to 344° C (350 to 650° F), to help drive the steam into the interior of the mat. Also, to help adjust or control the temperature of the superheated steam being ejected, means can be provided behind the die surface for blending saturated, or "plant", steam with the higher temperature superheated steam.

The duration of the steam injection must be long enough to assure that the adhesive is fully activated. Then a vacuum is applied to sweep air through the mat and remove the water vapor and any noxious chemicals which might have evaporated from the adhesive, such as, for example, formaldehyde vapors. If the adhesive is a thermoplastic one, this air sweep will also serve to cool the adhesive to below its melting point.

As thermosettable resins are heated, they normally go through a brief molten state before they harden and set. In the present process, if the dies are disposed horizontally and vacuum is pulled on the bottom tool while superheated vapor is ejected from the top tool, some of the molten resin, be it thermosettable or thermoplastic, will migrate to the bottom surface of the mat. This results in a smoother, harder finish on the bottom surface of the sheet, which may be preferred. It normally would be preferred, for example, if the sheet is to have a decorative fabric laminated to it. Such lamination can be performed either in a separate operation or, in some instances, simultaneously with the rigidifying of the mat. Resin-impregnated fiberglass mats generally require such a high cure temperature that it damages most decorative fabrics. If one wants to simultaneously laminate a decorative fabric to the surface of the sheet, it is better to use a mat formed of open-cell foam or shoddy.

The vacuum preferably is pulled through the perforations in one of the dies. Ideally, each die will have an enclosed chamber behind its contact surface, and this chamber will be in communication with the perforations in the die and with a valved source of the superheated vapor. It is also preferred that a valved vacuum line be connected to the chamber behind the contact surface of one of the dies. Both dies can be supplied with vacuum, but it generally is preferred that the vacuum be drawn through only one die at a time.

For a fuller understanding of the process of the present invention, reference is made to the drawings that accompany this specification. Referring to those drawings:

Figure 1 is a front view, in partial cross-section, of a set of complementary dies about to be compressed against a resin-impregnated fiberglass mat that is to be formed into a under-carpet insulating sheet to fit over the transmission tunnel in a van.

Figure 2 is a cross-sectional view, slightly enlarged, of the same dies and mat as shown in Figure 1, but with both die surfaces contacting the mat at the beginning of the compression step.

Figure 3 shows the same dies as in Figures 1 and 2, enlarged still further, but without the mat, and with the two dies brought fully together.

Figure 4 is a sectional view, enlarged still further, of the contoured insulating sheet produced from the mat shown in Figures 1 and 2.

Figure 5 is a schematic view of another set of dies, with a fiberglass mat between, used to form an

3

automobile headliner.

Figure 6 is a schematic view of the die set and mat shown in Figure 5, but with the die fully closed.

Figure 7 is a slightly enlarged view of the finished headliner prepared as shown in Figures 5 and 6.

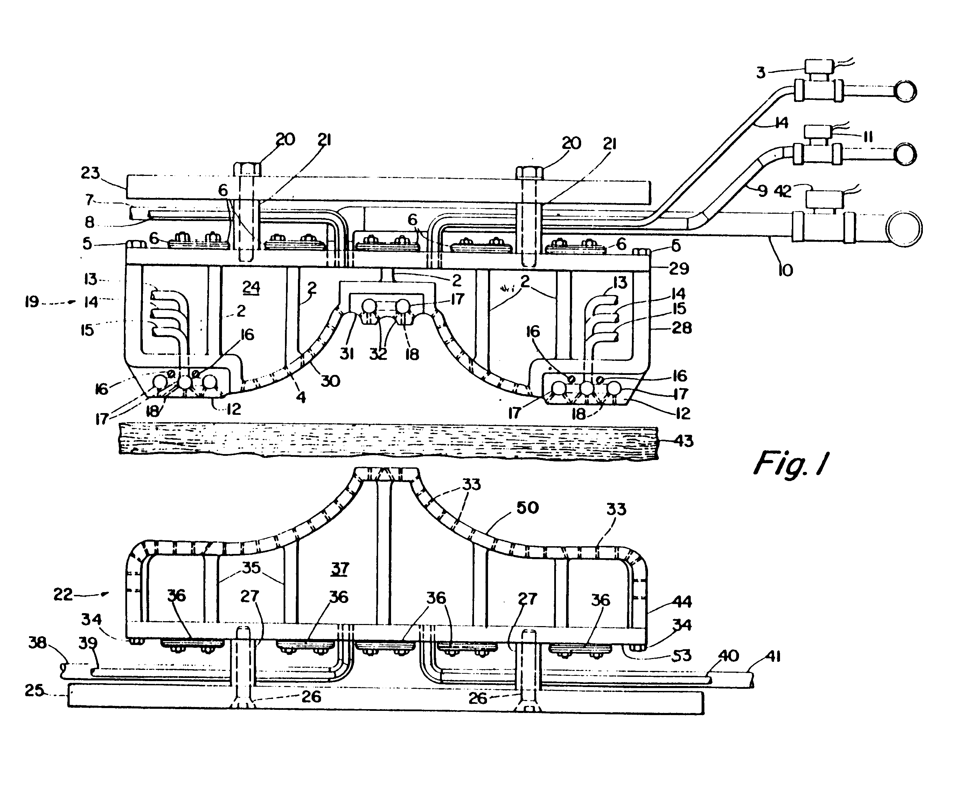

The apparatus shown in Figures 1-3 of the drawings includes an upper die 19 and a lower die 22. Upper die 19 is held to die holding plate 23 by hex head bolts 20. Spacer collars 21 hold plate 23 and die 19 apart, so as to leave room for flexible piping that communicates with the interior cavity 24 of die 19. Lower die 22 is similarly held to plate 24 by flat head bolts 26. Spacer collars 27 hold plate 25 and die 22 apart. Die holding plates 23 and 25 are mounted on a frame (not shown) so that plate 23 and the mechanism attached thereto can be raised and lowered into engagement with lower die 22. More detailed disclosures of such apparatus may be found in the aforementioned International Patent Applications Nos. PCT/US 86/02807 and PCT/US 87/01111.

Upper die 19 is comprised of a cast aluminum forming tool 28 with a detachable cover plate 29. Cover plate 29 is held to forming tool 28 by bolts 5, which are threaded into holes (not shown) in the periphery of tool 28. Internal posts 2 provide structural stability for upper die 19 and efficient heat transfer from electrically heated cover plate 29. Each post 2 is integral with the forming tool 28. None of the posts 2 extends the entire distance from the front to the back of die 19; therefore, chamber 24 is one continuous chamber, rather than a series of isolated compartments. The contact surface 30 of forming tool 28 is perforated. The preferred size and spacing of the holes 4 and 18 will vary according to the thickness and mass per surface of the mat used, as well as its composition. In the apparatus shown in the drawings, holes 4 and 18 are on a 6.35 mm (1/4-inch) grid and have a diameter of 1.524 mm (0.060 inch). On the bottom of upper die 19, at each side thereof, is mounted a bar section 12, which protrudes above the adjacent land area of contact surface 30. Similarly, at the center of upper die 19 is a third bar section 31 having two protruding ridges 32. Each protruding bar section 12 and 31 is perforated with rows of holes 18, which communicate with interior steam tunnels 17. Imbedded in each of the marginal bar sections 12 are a pair of cartridge heaters 16, which run parallel to the steam tunnels 17. Cartridge heaters 16 are electrical resistance heaters that can be used to bring the surface temperature of bar sections 12 to a higher point than that of the adjacent land area 30.

Attached to the top of cover plate 29 are five electrical resistance heaters 6. Each of these heaters has a rated capacity of 3.87 watts per cm$^2$ (25 watts per square inch) of contact surface. Four lines are tapped into chamber 24 through cover plate 29. Line 7 carries hot air. Line 8 carries saturated steam. Line 9 carries superheated steam. Line 10 pulls a vacuum. Flow in each of these lines is controlled by a solenoid valve. Valve 11 controls superheated steam line 9. Valve 42 controls vacuum line 10. (The valves controlling lines 7 and 8 are not shown.)

The steam tunnels 17 in bar sections 12 and 31 are all in communication with line 13 for saturated steam, line 14 for superheated steam and line 15 for hot air. Line 14 appears interrupted in the drawings. In actuality it is not. It is one continuous line with two branches, feeding the two banks of steam tunnels 17. Each of lines 13, 14, and 15 is also equipped with a solenoid valve (not shown). Line 14 is controlled by solenoid valve 3.

Lower die 22 is comprised of a cast aluminum forming tool 44 having a perforated contact surface 50. The holes 33 also are on a 6.35 mm (1/4-inch) grid and have a diameter of 1.524 mm (0.060 inch). They cover the entire contact surface 50. Forming tool 44 is held to cover plate 53 by a series of hex head bolts 34 around the periphery of plate 53. Vertical posts or ribs 35, which are integral with the forming tool 44, serve to strengthen lower die 22 and aid in the transfer of heat from electrical resistance heaters 36 to the contact surface 50. The enclosed chamber 37 between contact surface 50 and cover plate 53 is in communication with four pipes that are tapped through cover plate 53. Line 38 supplies hot air; line 39 supplies saturated steam; line 40 supplies superheated steam; and line 41 supplies a vacuum. The flow in each of these lines is controlled by a solenoid valve (not shown).

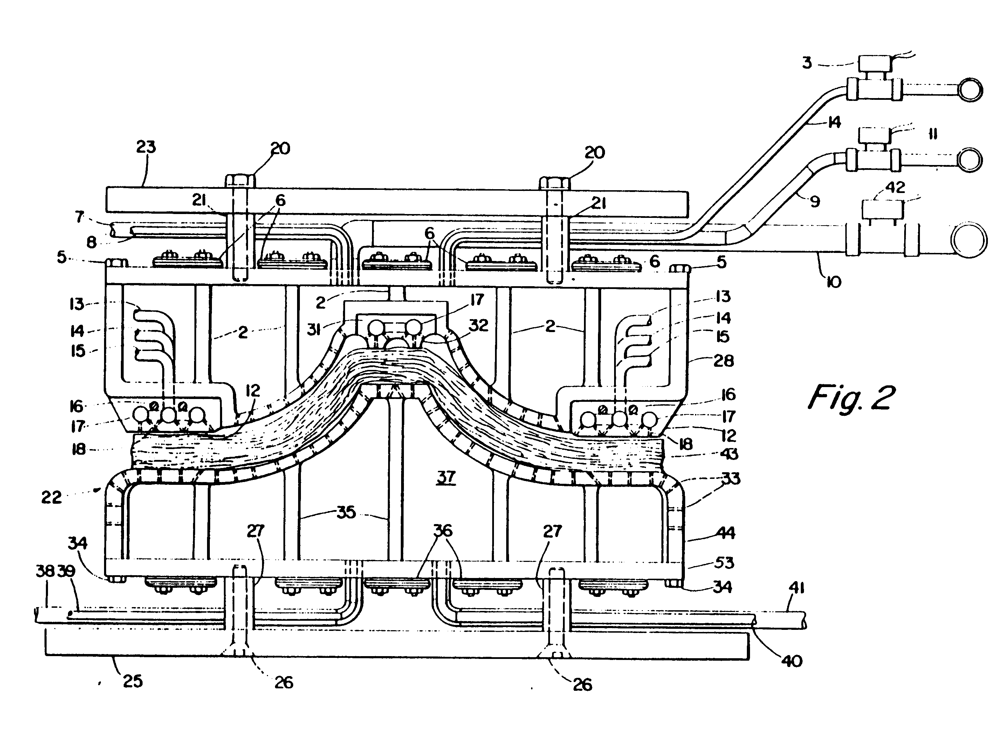

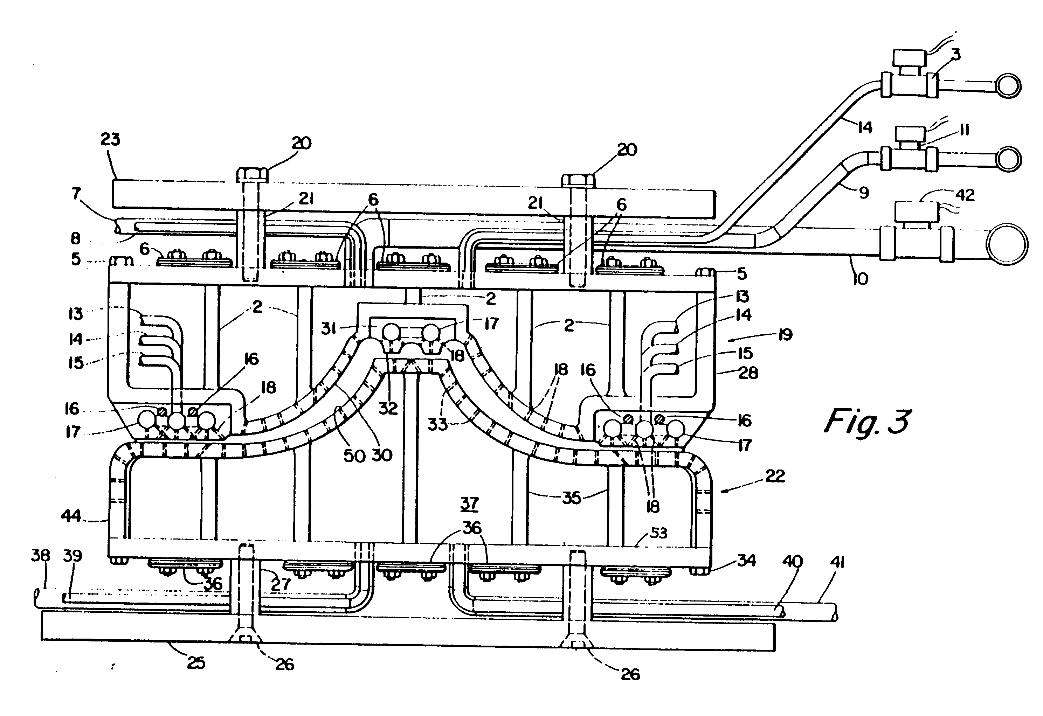

As shown in Figure 1, a mat 43 of randomly oriented glass fibers, impregnated with a theromosettable phenol-formaldehyde resin, is placed between upper die 19 and lower die 22. The contact surface 30 of die 19 is preheated by use of electrical heaters 6 and 16. The contact surface 50 of lower die 22 is preheated by use of electrical heaters 36. As shown in Figure 2, upper die 19 is lowered toward lower die 22, bending mat 43 in the process. In Figure 3, upper die 19 is lowered still further, to its fully closed position. For the sake of clarity, mat 43 has been omitted from this figure. As can be seen, the fully closed position of dies 19 and 22 does not involve actual contact between them. Narrow clearances remain in the regions of bar sections 12 and 31.

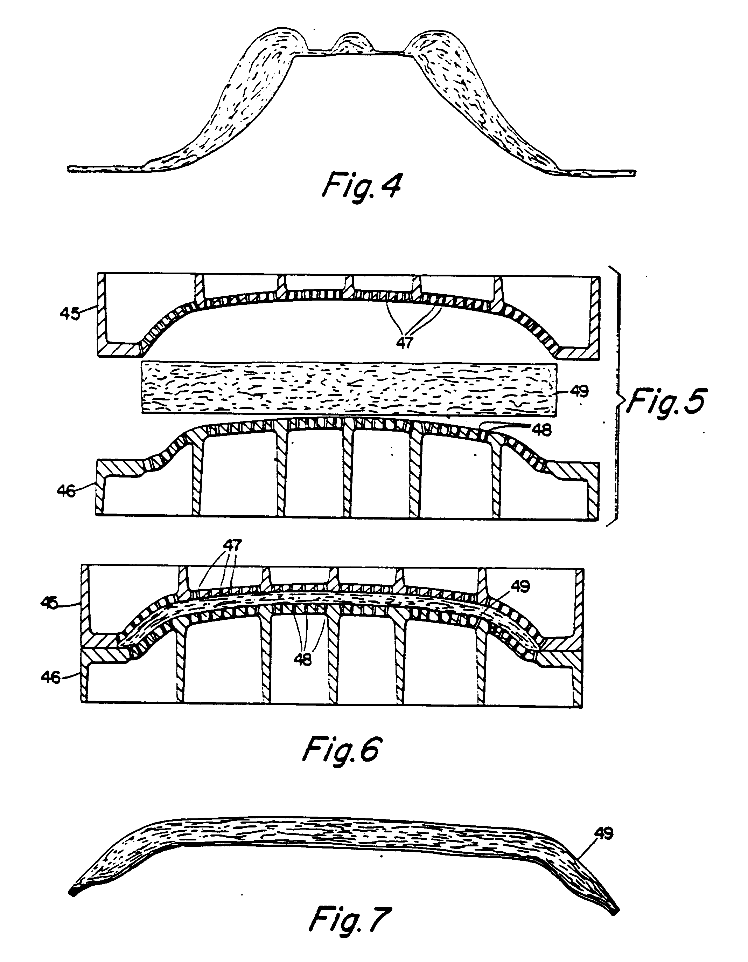

Figure 4 shows a cross-sectional view of a finished insulating sheet made using the apparatus illustrated in Figures 1-3. As stated above, this particular sheet is designed for use as a sound and heat insulator over the transmission tunnel in a van. It is installed inside the van, between the floor and the carpet.

The apparatus shown in Figures 5 and 6 consists of a top forming tool 45 and a bottom forming tool 46. Substantially the entire contact surfaces of both tools are perforated with holes 47 and 48. Both tools are provided with means (not shown) for preheating them and means (not shown) for ejecting superheated steam through their perforations. Bottom tool 46 is also equipped with means (not shown) to pull a vacuum through the perforations. Figure 5 shows forming tools 45 and 46 separated, with a mat 49 of uncured, resin-impregnated glass fibers in position to be compressed. Figure 6 shows forming tools 45 and 46 in their closed position, with fiberglass mat 49 compressed between them. Figure 7 depicts the finished automobile headliner 49 prepared by the process of Figures 5 and 6.

As shown in Figure 5, the uncompressed fiberglass mat 49 has a thickness of approximately 44.45 mm (1-3/4 inch). It measures approximately 1.5 m (60 inches) wide by 2.8 m (110 inches) long, and it has a mass per surface of approximately 1.1 $kg/m^2$ (2 lb./sq. yd). It is impregnated with an uncured phenol-formaldehyde resin. The finished headliner, shown in Figure 7, is a rigid, hard shell having a thickness of about 12.7 to 15.9 mm (1/2 to 5/8 inch) in the center, which tapers at the edges to about 3.1 to 4.8 mm (1/8 to 3/16 inch).

One example of the process conditions for preparing the headliner according to Figures 5-7 is as follows:

| Time Into the Cycle | Event/Conditions |
|---|---|
| 0 S: | Pre-heat both dies to a contact surface temperature of approximately 190°C (375°F), using electrical resistance heaters; then, to begin the cycle, commence ejecting superheated steam through the bottom tool. The temperature and pressure of the steam when entering the tool is about 316°C (600°F) and 6.5 bar (80 psig). Continue bottom tool steam ejection until 25 seconds into the cycle. Keep electric heaters on throughout the process. Begin gradually and constantly lowering top tool so that it requires 30 seconds to reach its completely lowered position. |
| 2 s: | The moving upper die makes first contact with the fiberglass mat. Commence ejecting superheated steam at the same temperature and pressure through the top tool as well. Continue top tool steam ejection until 30 seconds into the cycle. |
| 25 s: | Cease steam ejection through bottom tool and commence pulling vacuum of about 24 $m^3$ (850 cubic feet) per minute on bottom tool. |
| 30 s: | Upper tool is fully lowered. Cease steam ejection through top tool and shut off vacuum to lower tool. Adhesive is now set. Raise top tool and remove contoured sheet. |

## Claims

1. A process of forming and rigidifying a contoured insulating sheet (43;49) from a flexible, porous, substantially uniform thickness mat (43;49) composed either of loose fibers or of an open cell foam, the mat (43;49) being impregnated with a heat-activatable rigidifying adhesive and the activation temperature of the adhesive being below the temperature at which the mat (43;49) melts or degrades, said process comprising the following steps:

    a) compressing said mat (43;49) between a pair of complementary, contoured first and second dies (22,19) that are perforated across substantially their entire contact surfaces (50,30) and which, when brought fully together, define in the space between them the desired shape of the finished sheet, (43;49) each of said dies (22,19) being preheated to an elevated temperature;

    b) ejecting a heated gas through the perforations (33;47;48) in the first die (22) to heat the adhesive in the mat (43;49) to its activation temperature;

    c) passing ambient air through the mat, (43;49) until the adhesive is substantially set; and

    d) separating the dies (22,19) so the resultant contoured insulating sheet (43;49) can be removed;

EP 0 281 596 B1

characterized in that each of said dies (22,19) has an enclosed chamber (37,24) behind said contact surface (50,30), and in step (b) the heated gas is superheated steam that is conducted under pressure through a supply valve (11) into the chamber (37) of said first die (22).

2. The process of claim 1 wherein the perforations (33; 47, 48) in each of the dies (22, 19) have diameters in the range of about 0.88 to 2.42 mm (0.035 to 0.095 inch) and are spaced not more than about 12.7 mm (1/2 inch) apart.

3. The process of claim 1 wherein, in step (a), each of the dies (22,19) has been preheated to a temperature below the activation temperature of the adhesive, but within about 11°C (20 Fahrenheit degrees) thereof.

4. The process of claims 1 to 3 wherein the mat (43;49) is made of randomly oriented glass fibers.

5. The process of claims 1 to 4 wherein the adhesive has an activation temperature in the range of about 110° to 177°C (230 to 350°F).

6. The process of claim 5 wherein the adhesive is a phenol-formaldehyde resin.

7. The process of claims 1 to 6 wherein, in step (b), the steam is at a temperature of about 176° to 344°C (350 to 650°F) and a pressure of about 5.1 to 7.2 bar (75 to 90 psig).

8. The process of claims 1 to 7 wherein, in step (c), a vacuum is pulled through the perforations (33;47;48) in at least one of the dies (22,19), thereby pulling ambient air through the mat.

9. The process of claims 1 to 8 wherein the desired shape of the finished sheet (43;49) is that of an automobile headliner and the clearance between said dies is non-uniform.

10. The process of claims 1 to 9, wherein, in steps (a) and (b), the superheated steam is ejected into the mat (43; 49) while the dies (22, 19) are brought gradually together to compress the mat (43; 49), and, in step c), ambient air is passed through the mat (43; 49) by applying a vacuum to one of the dies (22, 19), while holding the mat (43; 49) compressed between the dies (22, 19).

11. The process of claims 1 to 10 wherein the dies (22,19) are arranged substantially horizontally and the mat (43;49) is laid atop the bottom die (22), and the superheated steam is ejected from the first die (22) only until the second die (19) also comes into contact with the mat (43;49), at which point the superheated steam is ejected from the second die (19) as well.

12. The process of claim 11 wherein steam ejection first is discontinued through the first die (22) only, and a vacuum is then applied for a time to the first die (22) to help pull the superheated steam from the second die (19) through the mat (43;49).

13. The process of claim 12 wherein the steam ejection from the second die (19) is discontinued after the dies (22,19) have been brought close enough together to bend and compress the mat (43;49) into the desired shape of the finished insulation panel.

14. The process of of claim 13 wherein a gap is left between the dies (22,19) when brought to their maximum closeness together, and the application of the vacuum to the first die (22) is continued after steam ejection from the second die (19) has been discontinued, so that, in step (c), the ambient air is pulled into the gap between the dies (22,19) and then through the mat (43;49).

15. The process of claims 1 to 14 wherein, in step (a), each die (22,19) is preheated to a temperature in the range of about 98° to 166°C (210° to 330°F).

16. The process of claims 4 to 15 wherein, in step (a), the mat (43;49) is made up of randomly oriented fibers impregnated with an uncured, heat-activatable adhesive.

17. The process of claims 6 to 16 wherein, in step (a), each die (22,19) is preheated to temperature below

6

the curing temperature of the phenol-formaldehyde resin, but within about 11°C (20 Fahrenheit degrees) thereof.

18. The process of claims 4 to 17 wherein, in step (a) the mat (43;49) has a thickness of about 38 to 51 mm (1-1/2 to 2 inches).

19. The process of claims 1 to 18, wherein, in step (b), superheated steam also is conducted under pressure through a supply thereof (11) into the chamber (24) of said second die (22), so as to be ejected into the mat (43; 49) from the opposite side as well.

**Revendications**

1. Procédé de moulage et de rigidification d'une feuille isolante (43 ; 49) profilée à partir d'un mat (43 ; 49) flexible, poreux, d'épaisseur sensiblement uniforme, composé soit de fibres lâches, soit d'une mousse à alvéoles ouvertes, le mat (43 ; 49) étant imprégné d'un adhésif rigidifiant thermoactivable et la température d'activation de l'adhésif étant inférieure à la température à laquelle le mat (43 ; 49) fond ou se décompose, ledit procédé comprenant les étapes suivantes :
   a) Compression dudit mat (43 ; 49) entre une paire d'une première et seconde matrices (22, 19) complémentaires, profilées, qui sont perforées sur sensiblement toutes leurs surfaces de contact (50, 30) et qui, lorsqu'elles sont totalement rapprochées, définissent dans l'espace entre elles la forme désirée pour la feuille finie (43 ; 49), chacune desdites matrices (22, 19) étant préchauffée à une température élevée ;
   b) Ejection d'un gaz chauffé par les perforations (33 ; 47 ; 48) dans la première matrice (22) pour chauffer l'adhésif dans le mat (43 ; 49) à sa température d'activation ;
   c) Passage d'air ambiant à travers le mat (43 ; 49), jusqu'à ce que l'adhésif soit sensiblement solidifié ; et
   d) Séparation des matrices (22, 19) de façon à pouvoir retirer la feuille isolante (43 ; 49) profilée obtenue ;
   caractérisé en ce que chacune desdites matrices (22, 19) possède une chambre fermée (37, 24) derrière ladite surface de contact (50, 30) et en ce qu'à l'étape (b) le gaz chauffé est de la vapeur surchauffée qui est acheminée sous pression par une soupape d'alimentation (11) dans la chambre (37) de ladite première matrice (22).

2. Procédé selon la revendication 1, dans lequel les perforations (33 ; 47, 48) dans chacune des matrices (22, 19) ont des diamètres de l'ordre d'environ 0,88 à 2,42 mm (0,035 à 0,095 pouce) et ne sont pas distantes les unes des autres de plus de 12,7 mm (1/2 pouce) environ.

3. Procédé selon la revendication 1, dans lequel, à l'étape (a) chacune des matrices (22, 19) a été préchauffée à une température inférieure à la température d'activation de l'adhésif, mais dans une marge d'environ 11ºC (20 degrés Fahrenheit) par rapport à celle-ci.

4. Procédé selon les revendications 1 à 3, dans lequel le mat (43 ; 49) est fait de fibres de verre à orientation aléatoire.

5. Procédé selon les revendications 1 à 4, dans lequel l'adhésif a une température d'activation comprise dans la plage d'environ 110ºC à 177ºC (230 à 350ºF).

6. Procédé selon la revendication 5, dans lequel l'adhésif est une résine de phénol-formaldéhyde.

7. Procédé selon les revendications 1 à 6, dans lequel, au cours de l'étape (b) la vapeur est à une température d'environ 176º à 344ºC (350 à 650ºF) et à une pression d'environ 5,1 à 7,2 bar (75 à 90 psig).

8. Procédé selon les revendications 1 à 7, dans lequel, au cours de l'étape (c), un vide est appliqué par les perforations (33 ; 47 ; 48) dans au moins une des matrices (22, 19), de l'air ambiant étant ainsi aspiré à travers le mat.

9. Procédé selon les revendications 1 à 8, dans lequel la forme désirée pour la feuille finie (43 ; 49) est celle d'une moulure de tête d'automobile et l'écartement entre lesdites matrices n'est pas uniforme.

**10.** Procédé selon les revendications 1 à 9, dans lequel, au cours des étapes (a) et (b), la vapeur surchauffée est éjectée dans le mat (43 ; 49) cependant que les matrices (22, 19) sont rapprochées graduellement pour comprimer le mat (43 ; 49) et qu'à l'étape (c) de l'air ambiant est passé à travers le mat (43 ; 49) par application d'un vide à l'une des matrices (22, 19), cependant que le mat (43 ; 49) est maintenu comprimé entre les matrices (22, 19).

**11.** Procédé selon les revendications 1 à 10, dans lequel les matrices (22, 19) sont disposées de façon sensiblement horizontale et le mat (43 ; 49) est posé sur la matrice inférieure (22) et dans lequel la vapeur surchauffée est éjectée de la première matrice (22) uniquement jusqu'à ce que la seconde matrice (19) vienne également en contact avec le mat (43 ; 49), point auquel la vapeur surchauffée est éjectée également de la seconde matrice (19).

**12.** Procédé selon la revendication 11, dans lequel on arrête d'abord l'éjection de vapeur par la première matrice (22) uniquement et on applique alors un vide pendant une certaine durée à la première matrice (22) pour contribuer à aspirer la vapeur surchauffée de la seconde matrice (19) à travers le mat (43 ; 49).

**13.** Procédé selon la revendication 12, dans lequel on arrête l'éjection de vapeur de la seconde matrice (19) après que les matrices (22, 19) aient été suffisamment rapprochées pour plier et comprimer le mat (43 ; 49) à la forme désirée pour le panneau isolant fini.

**14.** Procédé selon la revendication 13, dans lequel un intervalle est laissé entre les matrices (22, 19) lorsqu'elles sont rapprochées à leur maximum et l'application du vide à la première matrice (22) est poursuivie après l'arrêt de l'éjection de vapeur de la seconde matrice (19) de sorte qu'au cours de l'étape (c) l'air ambiant est aspiré dans l'intervalle entre les matrices (22, 19), puis à travers le mat (43 ; 49).

**15.** Procédé selon les revendications 1 à 14, dans lequel, au cours de l'étape (a) chaque matrice (22, 19) est préchauffée à une température comprise dans la plage d'environ 98° à 166°C (210° à 330°F).

**16.** Procédé selon les revendications 4 à 15, dans lequel, au cours de l'étape (a), le mat (43 ; 49) est constitué par des fibres à orientation aléatoire, imprégnées d'un adhésif thermoactivable non durci.

**17.** Procédé selon les revendications 6 à 16, dans lequel, au cours de l'étape (a), chaque matrice (22, 19) est préchauffée à une température inférieure à la température de durcissement de la résine de phénol-formaldéhyde, mais dans une marge d'environ 11°C (20°F) par rapport à celle-ci.

**18.** Procédé salon les revendications 4 à 17, dans lequel, au cours de l'étape (a), le mat (43 ; 49) a une épaisseur d'environ 38 à 51 mm (1 pouce 1/2 à 2 pouces).

**19.** Procédé selon les revendications 1 à 18, dans lequel, au cours de l'étape (b), de la vapeur surchauffée est également acheminée sous pression par une entrée de celle-ci (11) dans la chambre (24) de ladite seconde matrice (22), de façon à être également éjectée dans le mat (43 ; 49) du côté opposé.

**Patentansprüche**

**1.** Verfahren zur Formgebung und Verfestigung einer angepaßten Isolierplatte (43; 49) aus einer flexiblen, porösen, im wesentlichen gleichförmig dicken Matte (43; 49), die entweder aus losen Fasern oder aus einem offenzelligen Schaumstoff besteht, wobei die Matte (43; 49) mit einem durch Wärme aktivierbaren, verfestigenden Klebstoff imprägniert ist und die Aktivierungstemperatur des Klebstoffs unterhalb der Temperatur liegt, bei der die Matte (43; 49) schmilzt oder abbaut, wobei das Verfahren die folgenden Schritte aufweist:

a) Komprimieren der Matte (43; 49) zwischen einem Paar komplementären, geformten, ersten und zweiten Gesenken (22, 19), die über im wesentlichen ihre gesamten Kontaktflächen (50, 30) perforiert sind und in vollständig zusammengebrachtem Zustand in dem dazwischenliegenden Raum die gewünschte Form der fertigen Platte (43; 49) definieren, wobei jedes Gesenk (22, 19) auf eine erhöhte Temperatur vorgeheizt ist;

b) Ausstoßen eines erwärmten Gases durch die Perforationen (33; 47, 48) in dem ersten Gesenk (22), um den Klebstoff in der Matte (43; 49) auf seine Aktivierungstemperatur zu erwärmen;

c) Durchleiten von Umgebungsluft durch die Matte (43; 49) bis der Klebstoff im wesentlichen ausgehärtet ist; und

d) Trennen der Gesenke (22, 19), so daß die erhaltene, geformte Isolierplatte (43; 49) entnommen werden kann;

**dadurch gekennzeichnet,** daß jedes Gesenk (22, 19) eine eingeschlossene Kammer (37, 24) hinter der Kontaktfläche (50, 30) aufweist und im Schritt (b) das erwärmte Gas überhitzter Dampf ist, der unter Druck durch ein Einlaßventil (11) in die Kammer (37) des ersten Gesenks (22) eingeleitet wird.

2.  Verfahren nach Anspruch 1, wobei die Perforationen (33; 47, 48) in jedem Gesenk (22, 19) Durchmesser im Bereich von etwa 0,88 bis etwa 2,42 mm (0,035 bis 0,095 inch) haben und nicht mehr als etwa 12,7 mm (1/2 inch) voneinander beabstandet sind.

3.  Verfahren nach Anspruch 1, wobei im Schritt (a) jedes Gesenk (22, 19) auf eine Temperatur innerhalb eines Bereichs von etwa 11°C (20°F) unterhalb der Aktivierungstemperatur des Klebstoffs, vorgeheizt worden ist.

4.  Verfahren nach einem der Ansprüche 1 bis 3, wobei die Matte (43; 49) aus willkürlich orientierten Glasfasern hergestellt ist.

5.  Verfahren nach einem der Ansprüche 1 bis 4, wobei der Klebstoff eine Aktivierungstemperatur im Bereich von etwa 110° bis 177°C (230 bis 350°F) hat.

6.  Verfahren nach Anspruch 5, wobei der Klebstoff ein Phenolformaldehyd-Kunstharz ist.

7.  Verfahren nach einem der Ansprüche 1 bis 6, wobei im Schritt (b) der Dampf bei einer Temperatur von etwa 176° bis 344°C (350 bis 650°F) und der Druck bei etwa 5,1 bis 7,2 bar (75 bis 90 psig) liegt.

8.  Verfahren nach einem der Ansprüche 1 bis 7, wobei im Schritt (c) ein Unterdruck an den Perforationen (33;47;48) bei mindestens einem Gesenk (22, 19) liegt, um Umgebungsluft durch die Matte zu saugen.

9.  Verfahren nach einem der Ansprüche 1 bis 8, wobei die gewünschte Form der fertigen Platte (43; 49) die einer Dachauskleidung eines Kraftfahrzeugs und der Zwischenraum zwischen den Gesenken nicht gleichmäßig ist.

10. Verfahren nach einem der Ansprüche 1 bis 9, wobei in den Schritten (a) und (b) der überhitzte Dampf in die Matte (43; 49) ausgestoßen wird, während die Gesenke (22, 19) allmählich zusammengeführt werden, um die Matte (43; 49) zu komprimieren, und im Schritt (c) Umgebungsluft durch die Matte (43; 49) durch Anlegen eines Vakuums an eines der Gesenke (22, 19) geleitet wird, während die Matte (43; 49) zwischen den Gesenken (22, 19) gehalten wird.

11. Verfahren nach einem der Ansprüche 1 bis 10, wobei die Gesenke (22, 19) im wesentlichen horizontal angeordnet sind und die Matte (43; 49) auf das untere Gesenk (22) gelegt wird und wobei der überhitzte Dampf aus dem ersten Gesenk (22) nur solange ausgestoßen wird, bis das zweite Gesenk (19) ebenfalls in Berührung mit der Matte (43; 49) kommt, worauf dann der überhitzte Dampf ebenfalls aus dem zweiten Gesenk (19) ausgestoßen wird.

12. Verfahren nach Anspruch 11, wobei der Dampfausstoß zunächst nur durch das erste Gesenk (22) unterbrochen und dann ein Vakuum für einen Zeitraum an dem ersten Gesenk (22) anliegt, um den überhitzten Dampf aus dem zweiten Gesenk (19) durch die Matte (43; 49) zu saugen.

13. Verfahren nach Anspruch 12, wobei der Dampfausstoß aus dem zweiten Gesenk (19) unterbrochen wird nachdem die Gesenke (22, 19) ausreichend nahe zusammengebracht worden sind, um die Matte (43; 49) in die gewünschte Form der fertigen Isolierplatte zu biegen und zu komprimieren.

14. Verfahren nach Anspruch 13, wobei zwischen den weitestgehend zusammengebrachten Gesenken (22, 19) ein Zwischenraum verbleibt und das Anliegen des Vakuums an dem ersten Gesenk (22) fortgesetzt wird nachdem der Dampfausstoß aus dem zweiten Gesenk (19) beendet worden ist, so daß im Schritt (c) die Umgebungsluft in den Zwischenraum zwischen den Gesenken (22, 19) und dann durch die Matte (43; 49) gesaugt wird.

15. Verfahren nach einem der Ansprüche 1 bis 14, wobei im Schritt (a) jedes Gesenk (22, 19) auf eine Temperatur im Bereich von etwa 98° bis 166°C (210° bis 330°F) vorgewärmt wird.

16. Verfahren nach einem der Ansprüche 4 bis 15, wobei im Schritt (a) die Matte (43; 49) aus zufällig orientierten Fasern besteht, die mit einem ungehärteten, durch Wärme aktivierbaren Klebstoff imprägniert sind.

17. Verfahren nach einem der Ansprüche 6 bis 16, wobei im Schritt (a) jedes Gesenk (22, 19) auf eine Temperatur innerhalb von etwa 11°C (20°F) unterhalb der Aushärttemperatur des Phenolformaldehyd-Kunstharzes vorgewärmt wird.

18. Verfahren nach einem der Ansprüche 4 bis 17, wobei im Schritt (a) die Matte (43; 49) eine Dicke von etwa 38 bis 51 mm (1 1/2 bis 2 inch) hat.

19. Verfahren nach einem der Ansprüche 1 bis 18, wobei im Schritt (b) überhitzter Dampf ebenfalls unter Druck durch einen Einlaß (11) in die Kammer (24) des zweiten Gesenks (22) eingeleitet wird, um von der gegenüberliegenden Seite ebenfalls in die Matte (43; 49) ausgestoßen zu werden.

Fig. I

EP 0 281 596 B1

Fig. 2

EP 0 281 596 B1

Fig. 3

Fig. 4

Fig. 5

Fig. 6

Fig. 7